# EUROPÄISCHE PATENTSCHRIFT

(11) **EP 0 508 056 B1**
(45) Veröffentlichungstag und Bekanntmachung des Hinweises auf die Patenterteilung: **12.10.1994**
(21) Anmeldenummer: 92101950.1
(22) Anmeldetag: 06.02.1992
(51) Int. Cl.: C08L 19/00

(54) **Vernetzbare Mischungen aus Recycling-Gummigranulat und Kautschuk**
Crosslinkable fluids based on recycling rubber granulates and rubber
Mélanges réticulables à base de granulats de caoutchouc pour recyclage et de caoutchouc

(30) Priorität: 06.04.1991 DE 4111158
(43) Veröffentlichungstag der Anmeldung: 14.10.1992
(73) Patentinhaber: HÜLS AKTIENGESELLSCHAFT, 45764 Marl (DE)
(72) Erfinder: Peter, Julius, Dr., A-1130 Wien (AT); Schmidt, Peter, W-8264 Waldkraiburg (DE); Mahlke, Dieter, W-4370 Marl (DE); zur Nedden, Klaus, Dr., W-4358 Haltern (DE)

(56) Entgegenhaltungen:
- DD-A- 238 807
- US-A- 4 481 335
- WORLD PATENTS INDEX Section Ch, Week 8037, Derwent Publications Ltd., London, GB; Class A, AN 80-64912C & JP-A-55 099 938

## Beschreibung

Die Erfindung bezieht sich auf vernetzbare Mischungen, die Recycling-Gummigranulat und Kautschuk sowie übliche Hilfsstoffe enthalten, auf ein Verfahren zur Herstellung und die Verwendung der Mischungen.

Es ist bekannt, Abfall-Gummi aus gebrauchten Gegenständen, wie z. B. Fahrzeugreifen und aus Abfällen der kautschukverarbeitenden Industrie einer Wiederverwendung zuzuführen. Dabei finden im wesentlichen drei verschiedene Methoden Anwendung:

Zum einen kann Abfall-Gummi thermisch oder mechanisch, eventuell durch Zugabe von Chemikalien, teilweise depolymerisiert werden (Reclaiming). Die so erhaltenen, abgebauten plastischen Massen (Regenerat) ergeben nach neuerlicher Bearbeitung nur Produkte mit schlechten mechanischen und elastischen Eigenschaften.

Weiterhin kann Abfall-Gummi pyrolysiert werden, wenn nämlich die thermische Behandlung unter extremen Bedingungen und bei Ausschluß von Sauerstoff durchgeführt wird. Dies führt zur gleichzeitigen Bildung von festen, flüssigen und gasförmigen Stoffen, welches für eine vollständige Rückführung des Abfall-Gummis in den Produktionskreislauf unvorteilhaft ist. Beide Methoden haben außerdem den Nachteil, daß sie energieintensiv und somit teuer sind. Die dritte häufig angewendete Methode ist die Verarbeitung des Abfall-Gummis zu einem Recycling-Gummigranulat, welches dann sehr oft in geringen Mengen als Füllgut bei der Herstellung von Gummiprodukten dient.

Die reinen Recycling-Gummigranulate können auch neu verpreßt werden, doch bedingt durch das ungenügende Fließverhalten werden nur Produkte geringer Wertschöpfung und schlechter Eigenschaften erhalten.

Auch hat es nicht an Versuchen gefehlt, Recycling-Gummigranulat mit thermoplastischen Kunststoffen zu mischen. Solche Mischungen können dann (ggf. nach Extrusion und Granulation) durch Formpressen zu neuen Produkten verarbeitet werden. Jedoch sind solche Mischungen relativ inhomogen und weisen beim Verpressen ein ungünstiges Fließverhalten auf. Deshalb sind die mechanischen und elastischen Eigenschaften der daraus hergestellten Produkte für die meisten Anwendungsgebiete ungeeignet.

Diese Nachteile sind als Gründe dafür anzusehen, daß bis dato ein umweltschonendes und effektives, sowie auch wirtschaftliches Recycling von Abfall-Gummi nur in geringem Umfang durchgeführt wird. Insbesondere stellen die ungeheuren Mengen von nicht wiederverwerteten Altreifen ein erhebliches Umweltproblem dar.

Aufgabe der vorliegenden Erfindung ist deshalb, vernetzbare Mischungen auf der Basis von Recycling-Gummigranulat bereitzustellen.

Diese Aufgabe wird gelöst durch vernetzbare Mischungen aus Recycling-Gummigranulat und Kautschuk, wobei der Kautschuk in Öl gelöst ist.

Als Recycling-Gummigranulat können sowohl vernetzte Materialien auf der Basis von Allzweck-Elastomeren wie synthetisches und natürliches cis-1,4-Polyisopren (NR), Isobutylen-Isopren-Kautschuk (IIR), Styrol-Butadien-Kautschuke (SBR), Polybutadiene (BR) und Ethylen-Propylen-(Diene)-Kautschuke (Terkomponente z. B. 2-Ethylidennorbornen) als auch Vulkanisate auf der Basis von Spezial-Elastomeren wie z. B. Chlorbutadien-(CR) oder Acrylnitril-Butadien-Kautschuke verwendet werden.

Das Recycling-Gummigranulat kann aus Abfällen bestehen, die bei Herstellungsprozessen anfallen, wie z. B. bei der Profilfertigung. Andererseits kann das Granulat nach entsprechender Verarbeitung auch aus gebrauchten Gummigegenständen, wie z. B. Reifen, hergestellt werden.

Die Herstellung des Recycling-Gummigranulats erfolgt auf die in der Praxis bekannte Weise, z. B. in Schneidmühlen, durch Vermahlen auf Walzwerken oder durch Vermahlen eingefrorener Gummiteile in Hammermühlen (siehe z. B. W. Becker, D. Braun (Hrsg.) in: Kunststoffhandbuch, Bd. 1., Die Kunststoffe, Hanser-Verlag, München 1990, S. 300 ff.).

Der Durchmesser des verwendeten Recycling-Gummigranulats kann zwischen 0,1 und 10 Millimeter differieren. Vorzugsweise wird jedoch ein Granulat mit einer Teilchengröße von 0,5 bis 4 Millimeter eingesetzt. Grundsätzlich ist es aber auch möglich, Granulate mit größerem Durchmesser zu verwenden.

Prinzipiell sind je nach Beschaffenheit BR, EPDM, IR, IIR, NR sowie Polyoctenamer in Öl löslich. Das dazu verwendete Öl kann aus der Gruppe der Mineralöle sowie aus der Gruppe der synthetischen Weichmacher stammen. Selbstverständlich eignen sich je nach Anwendungszweck auch Gemische der genannten Öle. Die Lösegeschwindigkeit und die Löslichkeit selbst sind jedoch - abhängig vom Kautschuktyp, Molekulargewicht, Langkettenverzweigungsgrad der Polymeren - sehr unterschiedlich.

Eine bevorzugte Ausführungsform der Erfindung ist daher die Verwendung von in paraffinischem Öl gelösten trans-Polyoctenameren (TOR), da diese, aufgrund ihrer für einen Kautschuk ungewöhnlichen Thermoplastizität, bei Temperaturen über 60 °C gut und schnell in Öl löslich sind.

Polymeres Ausgangsmaterial für die erfindungsgemäßen Kautschuk-Mischungen sind die nach bekannten Verfahren des Standes der Technik hergestellten Polyoctenamere, d. h. aus Cycloocten mit Hilfe sogenannter Metathesekatalysatoren erhaltene Reaktionsprodukte. Diese Katalysatoren enthalten bekanntlich Verbindungen von Metallen der 5. bis 7. Nebengruppe des Periodischen Systems der Elemente (PSE), vornehmlich des Niobs, Tantals, Molybdäns, Wolframs und Rheniums sowie Metalle der 1. bis 4. Hauptgruppe des PSE bzw. deren Alkyle oder Hydride, gegebenenfalls mit weiteren Liganden, wie z. B. Halogen, Alkoxyl oder Carboxylat, oder an ihrer Stelle Lewis-Säuren. Außerdem können weitere aktivierende Zusätze, wie z. B. Alkohole, Epoxide, Hydroperoxide, Vinyl- und Allylether und -ester, Vinylhalogenide und aromatische Nitroverbindungen, Bestandteil des Katalysatorsystems sein.

Die Polymerisation kann in allen Lösemitteln durchgeführt werden, welche als geeignet bei der Polymerisation mit Hilfe von Ziegler-Natta-Katalysatoren bekannt sind. Die wichtigsten Vertreter aus der Gruppe der aliphatischen, alicyclischen, aromatischen und halogenierten Kohlenwasserstoffe sind folgende: Pentan, Hexan, Heptan, n- und iso-Octan, Isononan (hydriertes Trimerpropen), n-Decan, Isododecan (hydriertes Tetramerpropen), Cyclopentan, Cyclohexan, Methylcyclopentan, Methylcyclohexan, Ethylcyclohexan, Isopropylcyclohexan, Cyclooctan, Decahydronaphthalin, hydrierte Terpene, wie Pinan und Camphan, Cyclohexen und seine Substitutionsprodukte, Benzol, Toluol, o-, m-, p-Xylol, Ethylbenzol, o-, m-, p-Diethylbenzol, n-Propylbenzol, Isopropylbenzol und andere Mono- bis Polyalkylbenzole, Tetrahydronaphthalin, Methylenchlorid, Chloroform, Tetrachlorkohlenstoff, 1,2-Dichlorethylen, Trichlorethylen, Tetrachlorethylen, Chlorbenzol, o-Dichlorbenzol, Trichlorbenzol (Isomerengemisch),Brombenzol, Fluorbenzol, 1,2-Dichlorethan.

Wesentlich ist, daß die Lösemittel durch geeignete Reinigung möglichst frei von Wasser und anderen H-aciden Verbindungen sowie Verbindungen mit Donatorfunktionen (Lewis-Basen) eingesetzt werden. Außer sehr kleinen Mengen, die gegebenenfalls zur Erzielung bestimmter Effekte zugesetzt werden, beeinträchtigen solche Verunreinigungen im allgemeinen die Aktivität des Katalysators.

Die übliche Polymerisationstemperatur liegt zwischen -50 und +80 °C. Sie wird nach oben durch die thermische Stabilität des Katalysators und nach unten durch die zu weit herabgesetzte Reaktionsgeschwindigkeit begrenzt. Vorteilhaft arbeitet man bei Temperaturen zwischen -30 und +60 °C, vorzugsweise aber im Bereich zwischen 0 und +50 °C, der besonders leicht realisierbar ist.

Die Molekulargewichte der Polyoctenamere können durch den Zusatz offenkettiger - wahlweise auch funktionell substituierter - Olefine in weiten Grenzen eingestellt werden (DE-OS 29 22 335 und DE-PSS 19 19 047, 19 45 358, 20 27 905, 20 28 935, 21 05 161 und 21 57 405).

Die zur Erreichung einer bestimmten Konsistenz notwendige Menge Regler hängt naturgemäß von der Art des Reglers, vom verwendeten Katalysator und den übrigen Polymerisationsbedingungen ab; die erforderliche Menge, die bis zu 50 Molprozent, bezogen auf eingesetztes Monomeres, betragen kann, läßt sich durch wenige Vorversuche leicht ermitteln.

Wenn der erwünschte oder erreichbare Umsatz sich eingestellt hat, desaktiviert man den Katalysator durch Zugabe eines Alkohols, wie z. B. Methanol, oder einer anderen H-aciden Verbindung.

Im allgemeinen werden Polyoctenamere mit einem Molekulargewicht (M_{w} = Gewichtsmittel des Molekulargewichts) bis zu 200 000, vorzugsweise zwischen 20 000 und 150 000, eingesetzt. Der trans-Gehalt liegt zwischen 50 und 90 %, bevorzugt zwischen 55 und 85 %.

Die Lösungsviskosität (J-Wert bestimmt in Toluol bei 25 °C und einer Konzentration von 0,005 g/cm³) der einsetzbaren Polyoctenamere beträgt 80 bis 200 ml/g, vorzugsweise 100 bis 150 ml/g.

Zur Herstellung der erfindungsgemäßen in Öl gelösten Kautschuk-Komponente geht man im allgemeinen wie folgt vor: In einem geeigneten Behälter mit Rührvorrichtung wird das Mineralöl auf eine Temperatur von 80 bis 100 °C erhitzt. Alsdann wird der Kautschuk in Form eines Granulats zugegeben und solange gerührt, bis er sich vollständig gelöst hat.

Die Rührzeit zur Lösung von trans-Polyoctenameren ist vorteilhaft kurz und beträgt je nach Verhältnis von Öl zu Kautschuk 15 - 60 Minuten.

Mischungen von Mineralölen und trans-Polyoctenameren in einem Verhältnis beginnend bei 95 Gew.-Teile zu 5 Gew.-Teile und endend bei 60 Gew.-Teile zu 40 Gew.-Teile werden bevorzugt zur Herstellung der erfindungsgemäßen vernetzbare Mischungen herangezogen, besonders bevorzugt sind Mischungen mit 90 bis 75 Gew.-Teile Öl und 10 bis 25 Gew.-Teile trans-Polyoctenamer.

Die auf diese Weise hergestellte in Öl gelöste Kautschuk-Komponente wird sodann mit dem Recycling-Gummigranulat vermischt. Das Vermischen wird in einem Schaufelmischer durchgeführt und ist vornehmlich abhängig von Beschaffenheit und Art des Recycling-Gummigranulats.

Bevorzugt kommt bei der Herstellung der erfindungsgemäßen vernetzbaren Mischungen ein Fluid-Mischer (z. B. der Firmen Diosna oder Henschel) zum Einsatz. Die beiden Komponenten werden dabei bei einer Temperatur von 10 bis 80 °C eingemischt. Auf diese Weise erzeugt man binnen kurzer Zeit, die durchschnittliche Dauer des Einmischen 5 beträgt 5 Minuten, eine hervorragende Benetzung der einzelnen Granulatteilchen.

Nach Beendigung des Einarbeitungsprozesses erhält man ein rieselfähiges Granulat. Dieses Granulat enthält neben den verschiedenen Recycling-Gummigranulaten je nach Verwendungszweck 3 bis 35 Gew.-Teile in Öl gelöstem Kautschuk, bezogen auf 100 Gew.-Teile Recycling-Gummigranulat. DAbei liegt die verwendete Menge des Kautschuks in einem Bereich von 0,5 bis 20 Gew.-Teilen, bezogen auf 100 Gew.-Teile Recycling-Gummigranulat.

Die erfindungsmäßigen vernetzbaren Mischungen können je nach Verwendungszweck weitere, in der Kautschuktechnologie bekannte Füll- und Hilfsstoffe, wie z. B. Ruß (z. B. N 330, N 550, N 762) und mineralische Substanzen (z. B. hochaktive Kieselsäure, Kaolin, Kreide), Flammschutzmittel (z. B. Aluminium- oder Magnesiumhydroxid) sowie Vernetzungsmittel enthalten.

Die Vernetzung wird mit den üblichen Vernetzungssystemen auf Basis von Schwefel, Schwefelspendern und Vulkanisationsbeschleunigern, wie auch mit Vulkanisationsharzen (z. B. auf der Basis von Resorzin-Formaldehyd) oder Peroxiden durchgeführt.

Die Mengen werden so dosiert, daß ausreichende Vernetzung und somit auf den Verwendungszweck gerichtete optimale mechanische und elastische Eigenschaften erzielt werden.

Selbstverständlich ist auch die Verwendung von unvernetztem synthetischen und Naturkautschuk als Zusatz in den erfindungsgemäßen vernetzbaren Mischungen möglich.

Die erfindungsgemäßen vernetzbaren Mischungen können schnell und ohne großen Energieaufwand hergestellt werden. Sie lassen sich hervorragend zu Formkörpern verpressen, da ein weitgehendes plastisches Fließen während der Verarbeitung für eine optimale Verbindung der Recycling-Gummigranulatteilchen untereinander sorgt. Dadurch bedingt besitzen Vulkanisate der so hergestellten Formkörper ein gutes mechanisches wie elastisches Eigenschaftsbild.

Außerdem können die erfindungsgemäßen vernetzbaren Mischungen z. B. zur Herstellung von Bodenbelägen und Extrudaten verwendet werden.

Die Erfindung wird anhand der nachfolgenden Beispiele näher erläutert:

### Eingesetzte Produkte:

¹⁾ VESTENAMER^{R} 8012, trans-Gehalt ca. 80 %, Fa. Hüls AG, Germany
²⁾ paraffinisches Mineralöl, TUDALEN^{R} 8013, Fa. Dahleke, Ahrensburg, Germany
³⁾ CBS: Benzothiazyl-2-cyclohexylsulfenoxid
   VULKACIT^{R} CZ, Fa. Bayer AG, Germany

### Beispiel 1:

In einem 10 l Fluidmischer der Fa. Diosna werden bei Raumtemperatur 100 g EPDM Gummigranulat (Teilchengröße 0,5 bis 1,5 mm), 10 g eines auf 80 bis 100 °C erhitzten Gemisches aus 20 Gew.-Teilen trans-Polyoctenamer und 80 Gew.-Teilen Öl (siehe Tabelle 1), 0,15 g Schwefel und 0,15 g Beschleuniger 3 min lang bei einer Drehzahl von 500 UpM vermischt.

Das so erhaltene rieselfähige Granulat wird in eine Plattenpreßform gefüllt und 20 Minuten bei 180 °C und bei einem Pressdruck von 7 - 14 bar/cm³ vulkanisiert. Mechanische Daten wie Zugefestigkeit, Bruchdehnung und Spannungswert werden am Normstab ST nach DIN 53 504 und der Druckverformungsrest nach DIN 53 517 ermittelt.

**Tabelle 1**

| | | |
|---|---|---|
| Gemahlenes Recycling-Granulat | | 100 Gewichtsteile |
| Basiskautschuk EPDM | | |
| Teilchengröße 0,5 bis 1,5 mm | | |
| trans-Polyoctenamer¹⁾/Mineralölgemisch²⁾ 20 : 80 | | 10 Gewichtsteile |
| Schwefel | | 0,15 Gewichtsteile |
| Beschleuniger CBS³⁾ | | 0,15 Gewichtsteile |

| Vulkanisation 20 min/180 °C | | |
|---|---|---|
| Zugfestigkeit | MPa | 2,7 |
| Bruchdehnung | % | 598 |
| Modul bei 100 % Dehnung | MPa | 1,1 |

| Compr. Set | | |
|---|---|---|
| 70 h/23 °C | % | 35 |
| 24 h/70 °C | % | 33 |

| Heißluftalterung 7 d/100 °C | | |
|---|---|---|
| Zugfestigkeit | MPa | 2,5 |
| Bruchdehnung | % | 406 |

### Beispiele 2 bis 5:

Nach identischer Arbeitsweise und in den gleichen Apparaturen wie im Beispiel 1 angegeben, werden mit veränderten Parametern (Menge in Gewichtsteilen und Art der Einsatzstoffe) weitere Kautschuk-Mischungen und Vulkanisate hergestellt und geprüft (siehe Tabelle 2).

**Tabelle 2**

| | | 2 | 3 | 4 | 5 |
|---|---|---|---|---|---|
| Granulat Basis EPDM (Teilchengröße 1 - 4 mm) | | 100 | - | 100 | 100 |
| Granulat Basis NR (Teilchengröße 0,2 - 0,5 mm) | | - | 100 | - | - |
| trans-Polyocentamer¹⁾/Mineralölgemisch²⁾ 20 : 80 | | 10 | 10 | 5 | 30 |
| Schwefel | | 0,15 | 0,15 | 0,08 | 0,45 |
| Beschleuniger CBS³⁾ | | 0,15 | 0,15 | 0,08 | 0,45 |

| Vulkanisation 20 min/180 °C | | | | | |
|---|---|---|---|---|---|
| Zugfestigkeit | MPa | 2,7 | 3,3 | 2,2 | 2,1 |
| Bruchdehnung | % | 671 | 271 | 438 | 814 |
| Modul bei 100 % Dehnung | MPa | 1,0 | 1,5 | 1,3 | 0,5 |

| Compr. Set | % | | | | |
|---|---|---|---|---|---|
| 70 h/23 °C | | 36 | 22 | 39 | 35 |
| 24 h/70 °C | | 31 | 35 | 37 | 29 |

### Beispiel 6

Nach identischer Arbeitsweise wie im Beispiel 1 wird in einem Fluidmischer ein rieselfäihges Granulat hergestellt (Einsatzstoffe und Mengen in Gewichtsteilen siehe Tabelle 3). Dieses wird in einem Spritzgußautomaten der Fa. Battenfeld eingefüllt, bei 70 °C plastifiziert, und innerhalb 10 Sekunden in eine Becherform injiziert. Nach einer Vulkanisationszeit von 3 Minuten bei 200 °C (Pressdruck 7 - 14 bar/cm²) werden die mechanischen Eigenschaften nach DIN 53 504 am Normstab S II ermittelt.

**Tabelle 3**

| | | 6 |
|---|---|---|
| Granulat Basis SBR (Teilchengröße < 1mm) | | 100 |
| trans-Polyocentamer¹⁾/Mineralölgemisch²⁾ 20 : 80 | | 30 |
| ZnO RS | | 3 |
| Stearinsäure | | 1 |
| Schwefel | | 1,5 |
| Beschleuniger CBS³⁾ | | 1,5 |

| Prüfung am Fertigteil (S II-Stab aus Gipsbecher) | | |
|---|---|---|
| Zugfestigkeit | MPa | 4,0 |
| Bruchdehnung | % | 207 |
| Modul 100 % D | MPa | 1,5 |

## Patentansprüche

1. Vernetzbare Mischungen aus Recycling-Gummigranulat und Kautschuk dadurch gekennzeichnet,
daß der Kautschuk in Öl gelöst ist.

2. Vernetzbare Mischungen gemäß Anspruch 1,
dadurch gekennzeichnet,
daß das Recycling-Gummigranulat aus vernetztem Kautschuk besteht.

3. Vernetzbare Mischungen gemäß den Ansprüchen 1 und 2,
dadurch gekennzeichnet,
daß der vernetzte Kautschuk aus BR, EP(D)M, IR, IIR, NR, Polyoctenamer oder SBR besteht.

4. Vernetzbare Mischungen gemäß den Ansprüchen 1 bis 3,
dadurch gekennzeichnet,
daß der in Öl gelöste Kautschuk aus BR, EP(D)M, IR, IIR, NR oder Polyoctenamer besteht.

5. Vernetzbare Mischungen gemäß den Ansprüchen 1 bis 4,
dadurch gekennzeichnet,
daß der in Öl gelöste Kautschuk aus trans-Polyoctenameren besteht.

6. Vernetzbare Mischungen gemäß den Ansprüchen 1 bis 5,
dadurch gekennzeichnet,
daß sie zusätzlich Vulkanisationsmittel und weitere Hilfsmittel enthalten.

7. Vernetzbare Mischungen gemäß den Ansprüchen 1 bis 6,
dadurch gekennzeichnet,
daß sie zusätzlich weiteren unvernetzten Natur- oder Synthesekautschuk enthalten.

8. Verfahren zur Herstellung von vernetzbaren Mischungen aus Recycling-Gummigranulat und Kautschuk gemäß den Ansprüchen 1 bis 7,
dadurch gekennzeichnet,
daß die Gummiteilchen nach der Zugabe von in Öl gelöstem Kautschuk vermischt werden.

9. Verfahren zur Herstellung von vernetzbaren Mischungen gemäß Anspruch 8,
dadurch gekennzeichnet,
daß man während des Mischens zusätzlich Vulkanisationsmittel und Hilfsstoffe zugibt.

10. Verwendung der vernetzbaren Mischungen gemäß den Ansprüchen 1 bis 9 zur Herstellung von Formkörpern.

11. Verfahren zur Herstellung von Formkörpern aus Recycling-Gummigranulat und Kautschuk,
dadurch gekennzeichnet,
daß das Gummigranulat mit in Öl gelöstem Kautschuk vermischt und anschließend verformt wird.

12. Verfahren zur Herstellung von Formkörpern gemäß Anspruch 11,
dadurch gekennzeichnet,
daß das Recycling-Gummigranulat aus BR, EP(D)M, IR, IIR, NR, Polyoctenamer oder SBR besteht.

13. Verfahren zur Herstellung von Formkörpern gemäß den Ansprüchen 11 bis 12,
dadurch gekennzeichnet,
daß der in Öl gelöste Kautschuk aus BR, EP(D)M, IR, IIR, NR oder Polyoctenamer besteht.

14. Verfahren zur Herstellung von Formkörpern gemäß den Ansprüchen 11 bis 13,
dadurch gekennzeichnet,
daß der in Öl gelöste Kautschuk aus trans-Polyoctenameren oder Naturkautschuk besteht.

15. Verfahren zur Herstellung von Formkörpern gemäß den Ansprüchen 11 bis 14,
dadurch gekennzeichnet,
daß zusätzlich Vulkanisationsmittel und Hilfsmittel sowie Füllstoffe zugegeben und die geformten Teile vernetzt werden.

## Claims

1. Crosslinkable mixtures comprising recycling rubber granules and caoutchouc
characterized in that
the caoutchouc is dissolved in oil.

2. Crosslinkable mixtures according to claim 1,
characterized in that
the recycling rubber granules consist of crosslinked caoutchouc.

3. Crosslinkable mixtures according to claims 1 and 2,
characterized in that
the crosslinked caoutchouc consists of BR, EP(D)M, IR, IIR, NR, polyoctenamer or SBR.

4. Crosslinkable mixtures according to claims 1 to 3,
characterized in that
the caoutchouc dissolved in oil consists of BR, EP(D)M, IR, IIR, NR or polyoctenamer.

5. Crosslinkable mixtures according to claims 1 to 4,
characterized in that
the caoutchouc dissolved in oil consists of transpolyoctenamers.

6. Crosslinkable mixtures according to claims 1 to 5,
characterized in that
they additionally contain vulcanizing agents and other auxiliaries.

7. Crosslinkable mixtures according to claims 1 to 6,
characterized in that
they additionally contain other uncrosslinked natural or synthetic caoutchouc.

8. Process for the production of crosslinkable mixtures comprising recycling rubber granules and caoutchouc according to claims 1 to 7,
characterized in that
the rubber particles are mixed after the addition of caoutchouc dissolved in oil.

9. Process for the production of crosslinkable mixtures according to claim 8,
characterized in that
vulcanizing agents and auxiliaries are additionally added during mixing.

10. Use of the crosslinkable mixtures according to claims 1 to 9 for the production of moulded articles.

11. Process for the production of moulded articles comprising recycling rubber granules and caoutchouc,
characterized in that
the rubber granules are mixed with caoutchouc dissolved in oil and then moulded.

12. Process for the production of moulded articles according to claim 11,
characterized in that
the recycling rubber granules consist of BR, EP(D)M, IR, IIR, NR, polyoctenamer or SBR.

13. Process for the production of moulded articles according to claims 11 to 12,
characterized in that
the caoutchouc dissolved in oil consists of BR, EP(D)M, IR, IIR, NR or polyoctenamer.

14. Process for the production of moulded articles according to claims 11 to 13,
characterized in that
the caoutchouc dissolved in oil consists of transpolyoctenamers or natural caoutchouc.

15. Process for the production of moulded articles according to claims 11 to 14,
characterized in that
vulcanizing agents and auxiliaries and fillers are additionally added and the formed parts are crosslinked.

## Revendications

1. Mélanges réticulables à base de granulé de caoutchouc de recyclage et de caoutchouc, caractérisés en ce que le caoutchouc est dissout dans l'huile.

2. Mélanges réticulables selon la revendication 1, caractérisés en ce que le granulé de caoutchouc de recyclage consiste en un caoutchouc réticulé.

3. Mélanges réticulables selon les revendications 1 et 2, caractérisés en ce que le caoutchouc réticulé est formé de BR, d'EP(D)M, d'IR, d'IIR, de NR, de polyoctenamère ou de SBR.

4. Mélanges réticulables selon les revendications 1 à 3, caractérisés en ce que le caoutchouc dissout dans l'huile est formé de BR, de EP(D)M, d'IR, d'IIR, de NR ou de polyoctenamère.

5. Mélanges réticulables selon les revendications 1 à 4, caractérisés en ce que le caoutchouc dissout dans l'huile est formé de trans polyoctenamères.

6. Mélanges réticulables selon les revendications 1 à 5, caractérisés en ce qu'ils renferment en supplément un agent de vulcanisation et des agents adjuvants supplémentaires.

7. Mélanges réticulables selon les revendications 1 à 6, caractérisés en ce qu'ils renferment en supplément d'autres caoutchoucs non réticulés naturels ou synthétiques.

8. Procédé de fabrication de mélanges réticulables à base de granulé de caoutchouc de recyclage et de caoutchouc selon les revendications 1 à 7, caractérisé en ce que les particules de caoutchouc sont mélangées après l'addition de caoutchouc dissout dans l'huile.

9. Procédé de fabrication de mélanges réticulables selon la revendication 8, caractérisé en ce que l'on ajoute en supplément, pendant le mélange, un agent de vulcanisation et des adjuvants.

10. Utilisation des mélanges réticulables selon les revendications 1 à 9 en vue de la fabrication de corps de moulage.

11. Procédé de fabrication de corps de moulage à base de granulé de caoutchouc de recyclage et de caoutchouc, caractérisé en ce que le granulé de caoutchouc est mélangé à un caoutchouc dissout dans l'huile et ensuite est moulé.

12. Procédé de fabrication de corps de moulage selon la revendication 11, caractérisé en ce que le granulé de caoutchouc de recyclage est composé de BR, d'EP(D)M, d'IR, d'IIR, de NR, de polyoctenamère ou de SBR.

13. Procédé de fabrication de solides de moulage selon les revendications 11 à 12, caractérisé en ce que le caoutchouc dissout dans l'huile est composé de BR, d'EP(D)M, d'IR, d'IIR, de NR ou de polyoctenamère.

14. Procédé de fabrication de corps de moulage selon les revendications 11 à 13, caractérisé en ce que le caoutchouc dissout dans l'huile est composé de trans polyoctenamères ou de caoutchouc naturel.

15. Procédé de fabrication de corps de moulage selon les revendications 11 à 14, caractérisé en ce que l'on ajoute en supplément un agent de vulcanisation et un agent adjuvant ainsi que des substances de charge et que l'on procède à une réticulation des pièces moulées.
